# EUROPEAN PATENT SPECIFICATION

(11) **EP 2 149 082 B1**
(45) Date of publication and mention of the grant of the patent: **19.07.2017**
(21) Application number: 08749612.1
(22) Date of filing: 18.04.2008
(51) Int. Cl.: G06F 3/12, H04N 1/00, H04N 1/32

(54) **A PRINT APPARATUS, A METHOD OF CONTROLLING PRINTING, AND A PROGRAM**
DRUCKGERÄT, VERFAHREN ZUR DRUCKSTEUERUNG UND PROGRAMM
APPAREIL D'IMPRESSION, PROCÉDÉ DE COMMANDE D'IMPRESSION, ET PROGRAMME

(30) Priority: 18.04.2007 GB 0707492
(43) Date of publication of application: 03.02.2010
(73) Proprietor: CANON EUROPA N.V., 1185 XB Amstelveen (NL)
(72) Inventor: HUSTER, Karsten, D49186 Bad Iburg (DE)
(74) Representative: Garner, Jonathan Charles Stapleton
(86) International application number: PCT/EP2008/054763
(87) International publication number: WO 2008/129011

(56) References cited:
- EP-A- 1 739 536
- WO-A-2007/019565

## Description

### BACKGROUND OF THE INVENTION

### Field of the Invention

. The present invention related to a printing apparatus, a method of printing, and a printing program.

. Many businesses and other organisations run computer networks including networked printers. This arrangement is convenient because it allows many individuals within an organisation to print from a common printer making more efficient use of resources.

. In such networks, a print server typically controls the printer. In known systems, the print server may be accessed by users to store print jobs and to send print jobs for printing. For example, the EP 1 739 536 A1 discloses a method and system for managing documents distributed on a network.

. However, larger organisations may have several offices in different locations and users may wish to print from or to different offices depending on where they are located and where they intend to travel. Printing jobs between offices, of course, requires transmission of print data between offices.

. One conventional way in which the issue of printing between offices can be overcome is by having a central print server in one of the offices. In this setup, users from each office print via a single print server. In this setup, the issue of printing jobs in different offices can be easily overcome by selecting an appropriate printer to print to when printing.

. However, a disadvantage of this known arrangement is that the cost of transmission of data increases with distance and the speed of transmission decreases. Therefore, because for at least some offices the print server is remote, the cost of printing is undesirably high and the print rate undesirably low.

### SUMMARY OF THE INVENTION

. It is an object of the present invention to alleviate some of the problems identified above.

. According to a first aspect of the present invention there is provided a print apparatus according to claim 1.

. The server associated with a user in the list of users is referred to hereinafter as the user's "home server".

. Preferably, the home server is selected based on information relating to the server that the user is most likely to use. This information might be, for example, information about the office from which the user routinely works, or information about the print server to which the user has made requests in the past.

. In such embodiments, because the at least one server is configured to refer to a list identifying users and associated servers, which associated servers are likely to be local to the users, a print apparatus can be provided that normally allows printing quickly, without the costs of long distance data transmission, and still allows printing from different offices depending upon the location of the user.

. In some embodiments, the print server may be configured so that if a print job is received at the print server from a user for printing at a printer on a local network, the print server will send the job for printing without contacting another of the plurality of print servers. If several printer servers are configured like this at each of the offices that a user may visit, then a user may always print locally (for example within the office) even when not printing from his or her home server.

. In other embodiments, the print server is configured such that if a request relating to a print job stored on another one of the plurality of servers is received, then after referring to the list of users to determine which server the print job is stored on, the server sends a request to the server on which the print job is stored to be sent the print job.

. In other embodiments, the request to the server on which the print job is stored may be sent as a result of a user logging on to the print server. Such embodiments are advantageous because by pre-fetching the user's print jobs, the server may respond more quickly to user requests in connection with the fetched print jobs.

.

.

. The print server may be configured to delete the job received from the user after the first predetermined period from receipt of the print job. Preferably, the first predetermined period is longer than the second predetermined period so that when the print job has been deleted a copy of the print job is still available on the user's home server.

. There may be provided a print system comprising a plurality of print servers according to the first aspect of the present invention connected to each other via a network.

. Preferably, the system is setup configured so that each print server has a matching list of users. The system may be setup so that the print servers are configured to periodically synchronise their lists of users. The synchronisation of the lists of users may be performed by each server except for a designated server sending its list of users to the designated server. The designated server may be configured to update the list of users based on the received lists of users and its own list of users and to send the updated list of users to the other print servers to complete synchronisation.

. The system may be configured to automatically change the identity of the server associated with a user (user's home server) on the list of users. The system may be configured to change the identity of a user's home server based on a log of the jobs printed by the user on one or more of the print servers 1. Preferably the print servers are configured to each keep a log of print jobs printed by users from that server. In such embodiments, the logs of print jobs printed may be sent to the designated server during synchronisation of the list of users and the identity of the home servers may be updated when the designated server updates the list of users.

. According to a second aspect of the present invention there is provided a method of controlling printing according to claim 10.

### BRIEF DESCRIPTION OF THE DRAWINGS

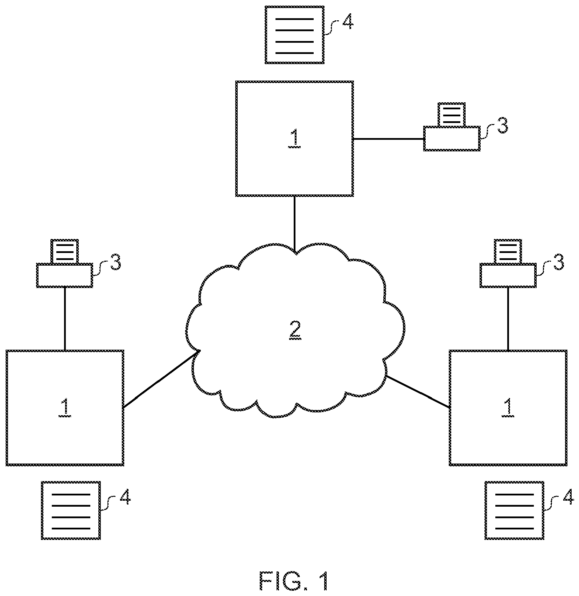

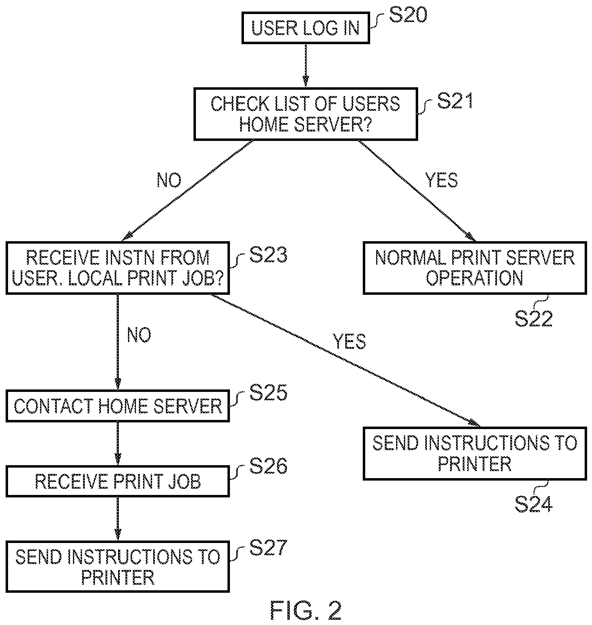

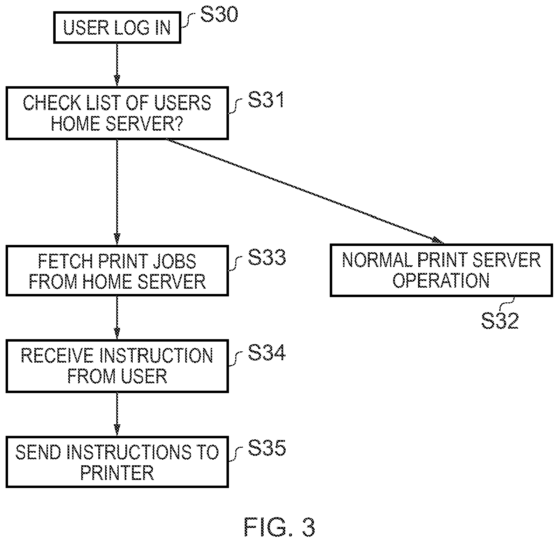

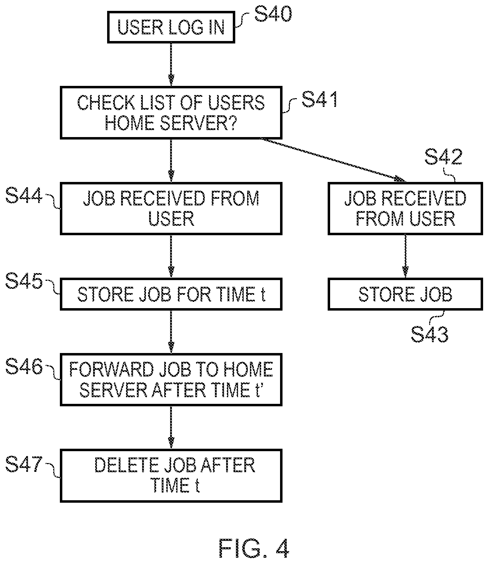

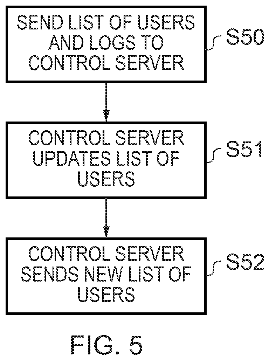

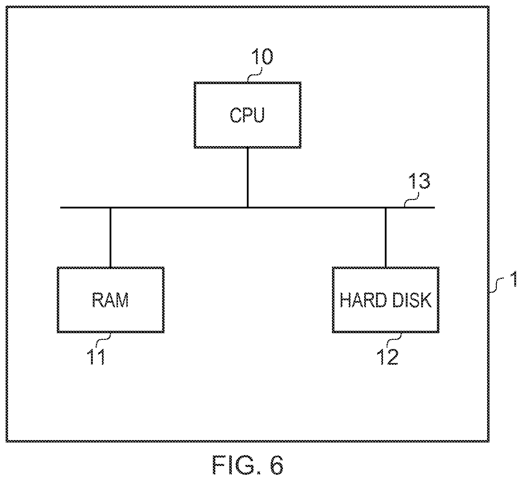

. An embodiment of the present invention will now be described, by way of example only, with reference to the accompanying drawings in which:
. Figure 1 is a schematic diagram showing three networked print servers;
. Figure 2 is a chart showing basic operation of a print server embodying the present invention;
. Figure 3 is a chart showing a pre-fetching operation of a second embodiment of the present invention;
. Figure 4 is a chart showing print job forwarding of the print server;
. Figure 5 is a chart showing synchronisation of a list of users between print servers embodying the present invention; and
. Figure 6 is a simplified diagram of the hardware of a print server.

### DESCRIPTION OF THE EMBODIMENTS

. Figure 1 shows three print servers 1 connected via a network 2, such as a WAN. The print servers are configured to communicate with each other, as described in more detail below, based on the HTTP protocol. Use of HTTP protocol avoids difficulty with communication through firewalls.

. Associated with each print server 1 is at least one printer 3. On each print server 1, a default printer 3 for secure printing is identified. This default printer 3 is commonly named on each print server 1 so that user's logging on to different print servers 1 will always know a printer 3 that they can print to securely.

. Stored on each of the print servers 1 is a list of users 4. As will be explained in more detail later, the list of users 4 is the same on each print server 1. The list of users 4 includes a list of user names, which includes the name of each user of the networked print servers 1. Associated with each user name on the list of users 4 is a print server 1, known as a "home server". The home server 1 represents the print server 1 that the user is most likely to use and, as explained in more detail below, is determined based on the user's use of the print servers 1.

. Figure 2 is a chart showing operation of one of the print servers 1. In the embodiment shown in Figure 1, the operation of each of the print servers 1 is identical and so only operation of one of the print servers 1 will be described in detail. However, in other embodiments, the print servers 1 need not be identical.

. At step S20, a user logs on to the print server 1. The log on may be performed in any manner, such as by entry of a user name and password or by using an identity card and a reader. The user may log on to the print server 1 via a computer connected to the print server 1, via a printer, via a Multifunctional Peripheral (MFP), or via any other suitable device connected to the print server 1. The computer, printer, or other device may be connected to the print server 1 directly, via a local network of some description, or otherwise.

. Once the user has logged on the print server 1, the print server 1 checks the users name against the list of users 4 to identify the user's home server. If the print server 1 is identified as the user's home server, the print server 1 operates as a conventional print server 1, S22. For example, the user may be able to print from the print server 1 or store print jobs on the print server 1 in accordance with the specifications of the software loaded on the print server 1.

. If it is determined that the print server 1 is not the user's home server and instructions are received from a user, it is determined whether or not the instructions relate to a local print job S23. A local print job is a job that is to be printed on a printer 3 connected to the print server 1 at which the instruction is received. Further, the print job must be included with the user's instructions or already be stored on the print server 1 where the instructions are received, such that no further information is required from another print server 1 for printing.

. If the print job is a local print job, then the print server 1 sends a print instruction to the appropriate local printer 3, S24. In this way, a user logged onto the print server 1 can print locally to the print server 1 without the need for communication between the networked servers 1.

. If the instructions from the user are for printing of a job stored on another print server 1, the print server 1 sends a request to the home server for the job S25. The print job is then received, S26, and the print server 1 sends the received job to the local printer 3 to be printed S27.

. Figure 3 is a chart showing pre-fetching operation of a print server 1 forming a second embodiment of the present invention. The first to third steps S30 to S32 in Figure 3 corresponds to steps S20 to S22 in Figure 2. Detailed description of these steps will therefore not be repeated.

. After logging on, S30, and checking the identity of the user's home server, S31, in step S33 a request is sent to the home server 1 for print jobs associated with the user. The print jobs associated with the user are sent by the home server 1 in response to the request and are subsequently received at the print server 1. In step S34 the user inputs instructions to print a job to the print server 1 and in step S35 the print server 1 sends instructions to the printer 3 to print the print job.

. The second embodiment differs from the first embodiment in that print jobs are requested from the home server 1 following the user's logon. As the print jobs are requested early in the process, at step S34, the print server 1 is likely to have relevant print jobs available to meet any request from the user when the request arrives. In the second embodiment, the user does not have to wait for steps S25 and S26 in the first embodiment and so the response to the user's requests may be quicker.

. Figure 4 shows operation of the print server 1 of the first embodiment when a user sends a print job to be stored on the print server 1.

. Steps S40 and S41 correspond to steps S20, S21 previously described. Detailed description of these steps will therefore be omitted.

. After logging on, S40, and identifying the user's home server, S41, at step S42, a print job is received from a user. If the print server 1 that receives the request is the user's home server, the print server operates as a conventional print server and stores the job on the print server 1 in step S43.

. If a print job is received from a user whose home server is another print server 1 at step S44, the print server 1 stores the print job for a first predetermined period, t, from receipt of the print job S45. In this embodiment, the print server 1 by default stores the job for 10 minutes. However, the time that the print server 1 stores the print job is settable via software on the print server 1.

. At step S46 the print server 1 forwards the job to the home server after a second predetermined period, t', from receipt of the print job. In this embodiment, the print server 1 forwards the job to the home server 1 by default after 1 minute. However, the time before the print server 1 forwards print job is settable via software on the print server 1.

. An advantage of storing the print job before forwarding the print job to the home server is that if the user immediately prints the print job, or deletes the print job from the print server 1, there is no need to send the print job to the home server and consequently network traffic is not unnecessarily generated.

. In step S47 the print server 1 deletes the job after the first predetermined period of time t. However, because the second predetermined period of time, t', is less than the first predetermined period of time, t, the job is still available to the user from his or her home server.

. In other embodiments the length of the periods t and t' may be different. One way of deciding how long t and t' should be is by considering how long it will take a user to get from a location where he has sent a job to a print server other than his home server to a location where he is logged into his home server. For example, if a user with a home server in London sends a print job to a server in Paris, the period t' for forwarding the job to the home server could be set to one or two hours because the user is unlikely to be in London using his home server as a local server before the end of that period. The period t before deletion from the Paris server should, of course, be set longer than the period t' so that a copy of the print job is available for forwarding. In other embodiments, the periods t and t' could be individually settable depending on the identity of the home server. In the example above this could mean that t and t' are longer on the server in Paris when it is determined that the home server is in Sydney than when the home server is determined to be in London.

. As explained in connection with Figure 1, in the above embodiments each print server 1 has an identical list of users 4. In order to keep the list of users synchronised between the print servers 1, in each of the embodiments above the print servers 1 are configured to synchronise their user lists periodically. In these embodiments the user lists 4 are synchronised every 15 minutes.

. During synchronisation, a designated control server 1 receives the list of users from each of the other print servers 1. The control server 1 compares the received lists of users 4 and its own list of users 4 and produces a new list of users 4 incorporating changes from all of the received lists of users 4. The control server 1 then sends the new list of users 4 to each of the other print servers 1.

. From time to time, users may relocate to different offices, new users will wish to use the print servers 1 and some users may no longer have access to the print servers 1 because, for example, they leave the organisation that owns the print servers 1. The changes can be introduced by manually updating the list of users 4 on a print server 4.

. A further feature of the above embodiments is the automatic updating of user's home servers based on information about which print servers 1 a user is using. In order to achieve this function, the print servers 1 generate a log of print jobs that they print. As shown in Figure 5, the print servers 1 synchronise their list of users 4 by sending both the list of users 4 and their logs to the control server 1, step S50. In this case, the control server 1 updates the list of users, S51, based on both the lists of users 4 received from the print servers 1 and its own list of users 4 and on the basis of received logs and its own log. In these embodiments, if a user prints from a print server 1 other than his or her home server more times than on to any other print server 1 in a given 24 hour period, the control server 1 changes the user's home server to the print server 1 other than his or her home server. Once the list of users has been updated, the control server 1 sends the new list of users to all the other print servers 1, S52.

. In this way, the user's home server can be quickly updated when a user moves between offices, for example to work in another office for a few days, allowing the traffic between servers to be minimised and reducing user waiting time while information is fetched from remote print servers 1.

. As will be apparent to persons skilled in the art, if a user wishes to print a job from a printer 3 that is not local to the user, this may be done by logging on to the print server 1 to which the printer 3 is local. An example would be a user who is using his home server located in London, and wishes to print a job stored on his home server on a printer in Paris connected to a print server located in Paris. The user may readily achieve this by logging on to the Paris print server and printing to the relevant printer in Paris. The Paris server would, as described above, identify his home server, retrieve his print job from the print server in London, and print the requested job in Paris. In other embodiments, rather than having to log on to the Paris print server, a user connection to the print server in Paris could be provided via software on the London server.

. Embodiments of the invention have been described above in terms of connected print servers 1. However, the present invention can also be embodied a single print server 1, by a program for a computer or by a storage medium carrying such a program as is set out in the claims.

. Figure 6 is a simplified schematic view of conventional server hardware used in the print servers 1. As is well known in the art, the servers 1 include a CPU 10, RAM 11, and a hard disk 12 connected to each other via a bus 13. Software that, when run, causes the print servers 1 to function as described above is stored in the hard disk 12. The software may be run using the CPU 10 and RAM 11 in a conventional manner. In this way, the stored software may control the print servers to perform steps in the methods described above with reference to Figures 2 to 5.

## Claims

1. A print server (1) for connection to a network (2) including a second print server (1) and at least one printer (3), the print server (1) storing a list of users (4) including for each user a home print server (1) with which that user is associated, the print server (1) configured so that if a request is received from a user, the print server (1) refers to the list of users (4) to determine which home print server (1) the user is associated with;
the print server (1) further configured so that if a user associated with the second print server (1) as their home print server sends a print job to the print server (1), the print server (1) stores the print job for a first predetermined period from receipt of the print job, and is configured to send a copy of the job to the home print server (1) associated with the user in the user list (4) after a second predetermined period from receipt of the print job.

2. A print server (1) according to claim 1 wherein the home print server (1) associated with each user represents a print server (1) that that user is considered to be likely to use.

3. A print server (1) according to claim 1 or claim 2, configured so that if a print job is received from a user for printing at a printer (3) local to the print server (1), the print server (1) will send the job for printing without contacting another print server (1).

4. A print server (1) according to any preceding claim, configured so that if a request relating to a print job stored on the second print server (1) is received, then after referring to the list of users (4) to determine which home print server (1) the user is associated with, the server sends a request to the home server (1) with which the user is associated to be sent the print job.

5. A print server (1) according to claim 1, wherein the print server (1) is configured to delete the job after a first predetermined period from receipt of the print job.

6. A print server (1) according to claim 5, wherein the first predetermined period is longer than the second predetermined period.

7. A print system comprising a plurality of print servers (1) according to any preceding claim connected to each other via a network.

8. A print system according to claim 7, wherein the system is configured to automatically change the identity of the home print server (1) associated with a user on the list of users (4).

9. A print system according to claim 8, wherein the system is configured to change the identity of the home print server (1) associated with a user on the list of users (4) based on a log of jobs printed by the user on one or more of the print servers (1).

10. A method of controlling printing, comprising the steps of:
storing a list of users (4) including for each user a home server (1) associated with that user;
when a request is received from a user, referring to the list of users (4) to determine a home server with which the user is associated; and
if a user associated with a second print server (1) as their home print server sends a print job to the print server (1), the print server (1) storing the print job for a first predetermined period from receipt of the print job, and sending a copy of the job to the home print server (1) associated with the user in the user list (4) after a second predetermined period from receipt of the print job.

11. A program which when run on a computer means causes the computer means to perform a method according to claim 10.

12. A storage medium storing a program according to claim 11.

## Patentansprüche

1. Druckserver (1) zur Verbindung mit einem Netz (2) mit einem zweiten Druckserver (1) und zumindest einem Drucker (3), wobei der Druckserver (1) eine Benutzerliste (4) speichert, enthaltend für jeden Benutzer einen Home-Print-Server (1), dem der Benutzer zugeordnet ist, wobei der Druckserver (1) derart konfiguriert ist, dass falls eine Anfrage von einem Benutzer empfangen wird, sich der Druckserver (1) auf die Benutzerliste bezieht (4) um zu bestimmen, welchem Home-Print-Server (1) der Benutzer zugeordnet ist;
der Druckserver (1) ferner konfiguriert ist, dass falls ein Benutzer, der dem zweiten Druckserver (1) als dessen Home-Print-Server zugeordnet ist, einen Druckauftrag an den Druckserver (1) sendet, der Druckserver (1) den Druckauftrag für eine erste vorbestimmte Periode ab Empfang des Druckauftrags speichert und konfiguriert ist, eine Kopie des Auftrags an den dem Benutzer in der Benutzerliste (4) zugeordneten Home-Print-Server (1) nach einer zweiten vorbestimmten Periode ab Empfang des Druckauftrags zu senden.

2. Druckserver (1) nach Anspruch 1, wobei der jedem Benutzer zugeordnete Home-Print-Server (1) einen Druckserver (1) darstellt, der vom Benutzer wahrscheinlich benutzt wird.

3. Druckserver (1) nach Anspruch 1 oder Anspruch 2, derart konfiguriert, dass falls ein Druckauftrag von einem Benutzer empfangen wird zum Drucken an einem Drucker (3), der lokal am Druckserver (1) ist, der Druckserver (1) den Druckauftrag sendet, ohne einen weiteren Druckserver (1) zu kontaktieren.

4. Druckserver (1) nach einem der vorangegangenen Ansprüche, derart konfiguriert, dass falls eine Anfrage bezüglich eines im zweiten Druckserver (1) gespeicherten Druckauftrags empfangen wird, nach Bezugnahme auf die Benutzerliste (4) zu bestimmen, welchem Home-Print-Server (1) der Benutzer zugeordnet ist, der Server eine Anfrage an den dem Benutzer zugeordneten Homeserver (1) sendet, diesem den Druckauftrag zu senden.

5. Druckserver (1) nach Anspruch 1, wobei der Druckserver (1) konfiguriert ist zum Löschen des Auftrags nach einer ersten vorbestimmten Periode ab Empfang des Druckauftrags.

6. Druckserver (1) nach Anspruch 5, wobei die erste vorbestimmte Periode länger als die zweite vorbestimmte Periode ist.

7. Drucksystem, umfassend mehrere über ein Netz miteinander verbundene Druckserver (1) nach einem der vorangegangenen Ansprüche.

8. Drucksystem nach Anspruch 7, wobei das System konfiguriert ist, automatisch die Identität des einem Benutzer aus der Benutzerliste (4) zugeordneten Home-Print-Servers (1) zu ändern.

9. Drucksystem nach Anspruch 8, wobei das System konfiguriert ist, die Identität des einem Benutzer aus der Benutzerliste (4) zugeordneten Home-Print-Servers (1) zu ändern basierend auf einem Protokoll von auf einem oder mehr der Printserver (1) durch den Benutzer gedruckten Aufträge.

10. Verfahren zum Steuern von Drucken, umfassend die folgenden Schritte:
Speichern einer Benutzerliste (4) enthaltend für jeden Benutzer einen diesem zugeordneten Homeserver (1);
wenn eine Anfrage von einem Benutzer empfangen wird, Bezugnehmen auf die Benutzerliste (4), um einen dem Benutzer zugeordneten Homeserver zu bestimmen; und
falls ein Benutzer, der einem zweiten Druckserver (1) als dessen Home-Print-Server zugeordnet ist, einen Druckauftrag an den Druckserver (1) sendet, der Druckserver (1) den Druckauftrag für eine erste vorbestimmte Periode ab Empfang des Druckauftrags speichert und eine Kopie des Auftrags an den dem Benutzer in der Benutzerliste (4) zugeordneten Home-Print-Server (1) nach einer zweiten vorbestimmten Periode ab Empfang des Druckauftrags sendet.

11. Programm, das bei Betrieb auf einer Computereinrichtung diese dazu veranlasst, ein Verfahren nach Anspruch 10 durchzuführen.

12. Speichermedium, das ein Programm nach Anspruch 11 speichert.

## Revendications

1. Serveur d'impression (1) pour connexion à un réseau (2) comprenant un deuxième serveur d'impression (1) et au moins une imprimante (3), le serveur d'impression (1) stockant une liste d'utilisateurs (4) comprenant, pour chaque utilisateur, un serveur d'impression domestique (1) auquel cet utilisateur est associé, le serveur d'impression (1) étant configuré de manière que si une demande est reçue d'un utilisateur, le serveur d'impression (1) se réfère à la liste d'utilisateurs (4) pour déterminer à quel serveur d'impression domestique (1) l'utilisateur est associé ;
le serveur d'impression (1) étant, en outre, configuré de manière que si un utilisateur associé au deuxième serveur d'impression (1), en tant que son serveur d'impression domestique, envoie une tâche d'impression au serveur d'impression (1), le serveur d'impression (1) stocke la tâche d'impression pendant une première période prédéterminée à partir de la réception de la tâche d'impression, et étant configuré pour envoyer une copie de la tâche au serveur d'impression domestique (1) associé à l'utilisateur dans la liste d'utilisateurs (4) après une deuxième période prédéterminée à partir de la réception de la tâche d'impression.

2. Serveur d'impression (1) selon la revendication 1, le serveur d'impression domestique (1) associé à chaque utilisateur représentant un serveur d'impression (1) que cet utilisateur est considéré comme susceptible d'utiliser.

3. Serveur d'impression (1) selon la revendication 1 ou la revendication 2, configuré de manière que, si une tâche d'impression est reçue d'un utilisateur pour impression au niveau d'une imprimante (3) locale relativement au serveur d'impression (1), le serveur d'impression (1) envoie la tâche d'impression sans contacter un autre serveur d'impression (1).

4. Serveur d'impression (1) selon l'une quelconque des revendications précédentes, configuré de manière que si une demande ayant trait à une tâche d'impression stockée sur le deuxième serveur d'impression (1) est reçue, alors, après s'être référé à la liste d'utilisateurs (4) pour déterminer à quel serveur d'impression domestique (1) est associé l'utilisateur, le serveur envoie une demande au serveur domestique (1) auquel est associé l'utilisateur pour recevoir la tâche d'impression.

5. Serveur d'impression (1) selon la revendication 1, le serveur d'impression (1) étant configuré pour supprimer la tâche au bout d'une première période prédéterminée à partir de la réception de la tâche d'impression.

6. Serveur d'impression (1) selon la revendication 5, dans lequel la première période prédéterminée est plus longue que la deuxième période prédéterminée.

7. Système d'impression comprenant une pluralité de serveurs d'impression (1) selon l'une quelconque des revendications précédentes, reliés les uns aux autres par le biais d'un réseau.

8. Système d'impression selon la revendication 7, le système étant configuré pour modifier automatiquement l'identité du serveur d'impression domestique (1) associé à un utilisateur sur la liste d'utilisateurs (4).

9. Système d'impression selon la revendication 8, le système étant configuré pour modifier l'identité du serveur d'impression domestique (1) associé à un utilisateur sur la liste d'utilisateurs (4) sur la base d'un journal de tâches imprimé par l'utilisateur sur un ou plusieurs des serveurs d'impression (1).

10. Procédé de commande d'impression, comprenant les étapes consistant à :
stocker une liste d'utilisateurs (4) comprenant, pour chaque utilisateur, un serveur domestique (1) associé à cet utilisateur ;
lorsqu'une demande est reçue d'un utilisateur, se référer à la liste d'utilisateurs (4) pour déterminer un serveur domestique auquel est associé l'utilisateur ; et
si un utilisateur associé à un deuxième serveur d'impression (1), en tant que son serveur d'impression domestique, envoie une tâche d'impression au serveur d'impression (1), le serveur d'impression (1) stockant la tâche d'impression pendant une première période prédéterminée à partir de la réception de la tâche d'impression, et envoyant une copie de la tâche au serveur d'impression domestique (1) associé à l'utilisateur dans la liste d'utilisateurs (4) après une deuxième période prédéterminée à partir de la réception de la tâche d'impression.

11. Programme qui, lorsqu'il s'exécute sur un moyen informatique, amène le moyen informatique à exécuter un procédé selon la revendication 10.

12. Support de stockage stockant un programme selon la revendication 11.
